(19) **Europäisches Patentamt / European Patent Office / Office européen des brevets**

(11) **EP 4 756 930 A1**

(12) **EUROPEAN PATENT APPLICATION**
published in accordance with Art. 153(4) EPC

(43) Date of publication:
**10.06.2026 Bulletin 2026/24**

(21) Application number: **24849187.0**

(22) Date of filing: **30.07.2024**

(51) International Patent Classification (IPC):
**H01M 4/62** (2006.01)    **H01M 4/13** (2010.01)
**H01M 4/134** (2010.01)    **H01M 4/139** (2010.01)
**H01M 4/1395** (2010.01)    **H01M 4/38** (2006.01)
**H01M 4/48** (2010.01)    **H01M 10/052** (2010.01)
**H01M 10/0566** (2010.01)

(52) Cooperative Patent Classification (CPC):
**H01M 4/13; H01M 4/134; H01M 4/139;**
**H01M 4/1395; H01M 4/38; H01M 4/48; H01M 4/62;**
**H01M 10/052; H01M 10/0566;** Y02E 60/10

(86) International application number:
**PCT/JP2024/027224**

(87) International publication number:
**WO 2025/028542 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.07.2023 JP 2023125066**
**18.12.2023 JP 2023213322**

(71) Applicant: **Zeon Corporation**
**Tokyo 100-8246 (JP)**

(72) Inventors:
• **TAGUCHI Hiroyuki**
  **Tokyo 100-8246 (JP)**
• **MATSUURA Shuuichiro**
  **Tokyo 100-8246 (JP)**
• **HAYASAKA Kentaro**
  **Tokyo 100-8246 (JP)**

(74) Representative: **Maiwald GmbH**
**Elisenhof**
**Elisenstraße 3**
**80335 München (DE)**

(54) **BINDER COMPOSITION FOR NON-AQUEOUS SECONDARY BATTERY ELECTRODE, SLURRY COMPOSITION FOR NON-AQUEOUS SECONDARY BATTERY ELECTRODE, ELECTRODE FOR NON-AQUEOUS SECONDARY BATTERY, AND NON-AQUEOUS SECONDARY BATTERY**

(57) Provided is a binder composition for a non-aqueous secondary battery electrode with which it is possible to form an electrode for a non-aqueous secondary battery that effectively inhibits faults in a non-aqueous secondary battery and that has excellent flexibility. The binder composition for a non-aqueous secondary battery electrode contains a particulate polymer and water. The particulate polymer includes a polymer that includes an aromatic vinyl monomer unit and a conjugated diene monomer unit. A binder film formed using the binder composition for a non-aqueous secondary battery electrode has a maximum pressing load of 100 nN or more and an elastic recovery of not less than 120 nm and not more than 200 nm when subjected to a nanoindentation test in which a surface of the binder film is pressed to a depth of 300 nm by an indenter.

EP 4 756 930 A1

**Description**

TECHNICAL FIELD

The present disclosure relates to a binder composition for a non-aqueous secondary battery electrode, a slurry composition for a non-aqueous secondary battery electrode, an electrode for a non-aqueous secondary battery, and a non-aqueous secondary battery.

BACKGROUND

Non-aqueous secondary batteries (hereinafter, also referred to simply as "secondary batteries") such as lithium ion secondary batteries have characteristics such as compact size, light weight, high energy density, and the ability to be repeatedly charged and discharged, and are used in a wide range of applications. Consequently, in recent years, studies have been made to improve battery members such as electrodes for the purpose of achieving even higher non-aqueous secondary battery performance.

An electrode used in a secondary battery normally includes a current collector and an electrode mixed material layer (positive electrode mixed material layer or negative electrode mixed material layer) formed on the current collector. This electrode mixed material layer is formed by, for example, applying a slurry composition containing an electrode active material, a bindercontaining binder composition, and so forth onto the current collector, and then drying the applied slurry composition.

In order to further improve the performance of secondary batteries, attempts have been made in recent years to improve binder compositions used in electrode mixed material layer formation. As one specific example, Patent Literature (PTL) 1 proposes using, as a binder composition for a non-aqueous secondary battery negative electrode with which it is possible to form a negative electrode mixed material layer having excellent resistance to peeling, a binder composition that contains a polymer including an ethylenically unsaturated carboxylic acid monomer unit, an aromatic vinyl monomer unit, and an aliphatic conjugated diene monomer unit, that has a degree of swelling in tetrahydrofuran and an amount of tetrahydrofuran-insoluble content that are within specific numerical ranges, and that has a ratio of viscosity at pH 8.0 relative to viscosity at pH 3.0 with a solid content concentration of 30 mass% that is within a specific numerical range.

CITATION LIST

Patent Literature

PTL 1: WO2023/008100A1

SUMMARY

(Technical Problem)

However, the conventional binder composition described above leaves room for improvement in terms of inhibiting faults in a secondary battery, such as deposition of lithium or other metal on an electrode.

The conventional binder composition described above also leaves room for improvement in terms of improving flexibility of an electrode.

Accordingly, one object of the present disclosure is to provide a binder composition for a non-aqueous secondary battery electrode with which it is possible to form an electrode for a non-aqueous secondary battery that effectively inhibits faults in a non-aqueous secondary battery and that has excellent flexibility.

Another object of the present disclosure is to provide a slurry composition for a non-aqueous secondary battery electrode with which it is possible to form an electrode for a non-aqueous secondary battery that effectively inhibits faults in a non-aqueous secondary battery and that has excellent flexibility.

Another object of the present disclosure is to provide an electrode for a non-aqueous secondary battery that effectively inhibits faults in a non-aqueous secondary battery and that has excellent flexibility.

Another object of the present disclosure is to provide a non-aqueous secondary battery in which faults are effectively inhibited and that has excellent flexibility.

(Solution to Problem)

The inventors conducted diligent investigation with the aim of solving the problems set forth above. The inventors made a new discovery that the problems set forth above can be solved with a binder composition for a non-aqueous secondary battery electrode that contains a particulate polymer including a polymer including an aromatic vinyl monomer unit and a conjugated diene monomer unit and water and that forms a binder film having a specific maximum pressing load and a specific elastic recovery when subjected to a nanoindentation test, and, in this manner, the inventors completed the present disclosure.

Specifically, with the aim of solving the problems set forth above, [1] a presently disclosed binder composition for a non-aqueous secondary battery electrode (hereinafter, also referred to simply as a "binder composition") comprises a particulate polymer and water, wherein the particulate polymer includes a polymer that includes an aromatic vinyl monomer unit and a conjugated diene monomer unit, and a binder film formed using the binder composition for a non-aqueous secondary battery electrode has a maximum pressing load of 100 nN or more and an elastic recovery of not less than 120 nm and not more than 200 nm when subjected to a nanoindentation test in which a surface of the binder film is pressed to a depth of 300 nm by an indenter.

With a binder composition such as set forth above, it is possible to form an electrode for a non-aqueous secondary battery that effectively inhibits faults in a non-aqueous secondary battery and that has excellent flexibility.

Note that a "monomer unit" of a polymer referred to in the present disclosure means a "repeating unit derived from the monomer that is included in a polymer obtained using that monomer".

The "maximum pressing load" and "elastic recovery" of a binder film referred to in the present disclosure can be measured according to a method described in the EXAMPLES section.

[2] In the binder composition for a non-aqueous secondary battery electrode according to the foregoing [1], a ratio Da/Db of a volume-average particle diameter Da of the particulate polymer measured by laser diffraction/scattering with a solid content concentration of 0.1 mass% and an average particle diameter Db of the particulate polymer measured by dynamic light scattering with a solid content concentration of 0.005 mass% is preferably not less than 1.4 and not more than 2.0.

When the ratio Da/Db of the volume-average particle diameter Da relative to the average particle diameter Db is not less than the lower limit set forth above, an obtained electrode can be caused to display good peel strength.

On the other hand, when the ratio Da/Db of the volume-average particle diameter Da relative to the average particle diameter Db is not more than the upper limit set forth above, cycle characteristics of an obtained non-aqueous secondary battery can be improved.

The solid content concentration of the binder composition with respect to which the "volume-average particle diameter Da" and the "average particle diameter Db" are measured in the present disclosure can be adjusted through addition of water or removal of water. Moreover, the "volume-average particle diameter Da" and "average particle diameter Db" of a particulate polymer referred to in the present disclosure can be measured according to methods described in the EXAMPLES section.

[3] In the binder composition for a non-aqueous secondary battery electrode according to the foregoing [1] or [2], the particulate polymer preferably includes a polymer A that includes an aromatic vinyl monomer unit and a conjugated diene monomer unit and a polymer B that includes an aromatic vinyl monomer unit and a conjugated diene monomer unit and that differs from the polymer A. When the particulate polymer includes two or more types of polymers, faults can be more effectively inhibited in an obtained non-aqueous secondary battery, and flexibility of an obtained electrode can be improved.

When the polymer A and the polymer B are said to "differ" in the present disclosure, this means that the polymer A and the polymer B differ in terms of either or both of chemical composition and properties.

[4] In the binder composition for a non-aqueous secondary battery electrode according to any one of the foregoing [1] to [3], the particulate polymer preferably has a degree of swelling in electrolyte solution of 300 mass% or less.

When the degree of swelling in electrolyte solution of the particulate polymer is 300 mass% or less, output characteristics and/or cycle characteristics of an obtained non-aqueous secondary battery can be improved.

Note that the "degree of swelling in electrolyte solution" of a particulate polymer referred to in the present disclosure can be measured according to a method described in the EXAMPLES section.

[5] In the binder composition for a non-aqueous secondary battery electrode according to any one of the foregoing [1] to [4], the polymer included in the particulate polymer preferably further includes an amide group-containing monomer unit.

When the polymer included in the particulate polymer further includes an amide group-containing monomer unit, cycle characteristics of an obtained non-aqueous secondary battery can be improved.

Moreover, with the aim of solving the problems set forth above, [6] a presently disclosed slurry composition for a non-aqueous secondary battery electrode (hereinafter, also referred to simply as a "slurry composition") comprises: an electrode active material; and the binder composition for a non-aqueous secondary battery electrode according to any one of the foregoing [1] to [5].

With a slurry composition such as set forth above, it is possible to form an electrode for a non-aqueous secondary battery that effectively inhibits faults in a non-aqueous secondary battery and that has excellent flexibility.

[7] In the slurry composition for a non-aqueous secondary battery electrode according to the foregoing [6], the electrode active material preferably includes a silicon-based negative electrode active material.

When an electrode active material that includes a silicon-based negative electrode active material is used, output characteristics and/or capacity of an obtained non-aqueous secondary battery can be improved.

Furthermore, with the aim of solving the problems set forth above, [8] a presently disclosed electrode for a non-aqueous secondary battery (hereinafter, also referred to simply as an "electrode") comprises: a current collector; and an electrode mixed material layer located on the current collector, wherein the electrode mixed material layer is a layer formed from the slurry composition for a non-aqueous secondary battery electrode according to the foregoing [6] or [7].

An electrode such as set forth above effectively inhibits faults in a non-aqueous secondary battery and has excellent flexibility.

Also, with the aim of solving the problems set forth above, [9] a presently disclosed non-aqueous secondary battery comprises a positive electrode, a negative electrode, a separator, and an electrolyte solution, wherein at least one of the positive electrode and the negative electrode is the electrode for a non-aqueous secondary battery according to [8].

A secondary battery such as set forth above has effective inhibition of faults and excellent flexibility.

(Advantageous Effect)

According to the present disclosure, it is possible to provide a binder composition for a non-aqueous secondary battery electrode with which it is possible to form an electrode for a non-aqueous secondary battery that effectively inhibits faults in a non-aqueous secondary battery and that has excellent flexibility.

Moreover, according to the present disclosure, it is possible to provide a slurry composition for a non-aqueous secondary battery electrode with which it is possible to form an electrode for a non-aqueous secondary battery that effectively inhibits faults in a non-aqueous secondary battery and that has excellent flexibility.

Furthermore, according to the present disclosure, it is possible to provide an electrode for a non-aqueous secondary battery that effectively inhibits faults in a non-aqueous secondary battery and that has excellent flexibility.

Also, according to the present disclosure, it is possible to provide a non-aqueous secondary battery in which faults are effectively inhibited and that has excellent flexibility.

DETAILED DESCRIPTION

The following provides a detailed description of embodiments of the present disclosure.

The presently disclosed binder composition for a non-aqueous secondary battery electrode can be used in production of a slurry composition for a non-aqueous secondary battery electrode. Moreover, a slurry composition for a non-aqueous secondary battery electrode produced using the presently disclosed binder composition for a non-aqueous secondary battery electrode can be used in formation of an electrode of a non-aqueous secondary battery such as a lithium ion secondary battery (i.e., an electrode for a non-aqueous secondary battery). Furthermore, the presently disclosed non-aqueous secondary battery includes an electrode for a non-aqueous secondary battery formed using the presently disclosed slurry composition for a non-aqueous secondary battery electrode.

Note that the presently disclosed binder composition for a non-aqueous secondary battery electrode and slurry composition for a non-aqueous secondary battery electrode can particularly suitably be used in formation of a negative electrode of a non-aqueous secondary battery.

(Binder composition for non-aqueous secondary battery electrode)

The presently disclosed binder composition for a non-aqueous secondary battery electrode contains a particulate polymer and water serving as a dispersion medium and may optionally further contain other components that can be compounded in an electrode of a secondary battery. Moreover, the particulate polymer in the presently disclosed binder composition includes a polymer that includes an aromatic vinyl monomer unit and a conjugated diene monomer unit. Furthermore, a binder film formed using the presently disclosed binder composition has a maximum pressing load in a nanoindentation test in which a surface of the binder film is pressed to a depth of 300 nm by an indenter (hereinafter, also referred to simply as "maximum pressing load") of 100 nN or more and an elastic recovery in a nanoindentation test in which a surface of the binder film is pressed to a depth of 300 nm by an indenter (hereinafter, also referred to simply as "elastic recovery") of not less than 120 nm and not more than 200 nm.

With a binder composition such as set forth above, it is possible to form an electrode for a non-aqueous secondary battery that effectively inhibits faults in a non-aqueous secondary battery and that has excellent flexibility. The reasons for these effects are presumed to be as follows.

Firstly, in consideration that an electrode (including a current collector and an electrode mixed material layer) can undergo pressing during electrode production, setting the maximum pressing load as not less than the lower limit set forth above is presumed to enable the maintenance of a certain distance between electrode active material in the electrode mixed material layer after pressing and thereby effectively suppress an increase of resistance of the electrode, which means that faults in a non-aqueous secondary battery can be effectively inhibited. Note that in a situation in which the presently disclosed binder composition is used in formation of a negative electrode mixed material layer of a lithium ion secondary battery, this is presumed to effectively suppress an increase of resistance of an obtained negative electrode and effectively inhibit deposition of metal lithium (lithium dendrites, etc.) on the negative electrode.

Moreover, setting the elastic recovery as not more than the upper limit set forth above is presumed to enable the formation of an electrode for a non-aqueous secondary battery having excellent flexibility because the binder can effectively extend when force is applied to the electrode during bending or the like.

In addition, the presently disclosed binder composition makes it possible to improve injectability of an obtained electrode mixed material layer. The reason for this is presumed to be that setting the elastic recovery as not less than the lower limit set forth above enables suitable widening of the distance between electrode active material by the binder in an electrode mixed material layer of an electrode after pressing.

Note that the presently disclosed binder composition does not normally contain an electrode active material that is described further below.

<Particulate polymer>

The particulate polymer is a component that can function as a binder that in an electrode including an electrode mixed material layer that has been formed using a slurry composition containing the binder composition, holds components such as an electrode active material, and thereby prevents shedding of these components from the electrode mixed material layer. The particulate polymer is required to include a polymer that includes an aromatic vinyl monomer unit and a conjugated diene monomer unit and can optionally further include other polymers (for example, a polymer that does not include an aromatic vinyl monomer unit and a conjugated diene monomer unit and a polymer that only includes one of an aromatic vinyl monomer unit and a conjugated diene monomer unit).

Note that the particulate polymer may include just one type of polymer that includes an aromatic vinyl monomer unit and a conjugated diene monomer unit or may include two or more types of such polymers. Moreover, the polymer included in the particulate polymer is normally a water-insoluble polymer and can have an insoluble content of 90 mass% or more when 0.5 g of the polymer is dissolved in 100 g of water at a temperature of 25°C.

[Polymer]

The polymer includes an aromatic vinyl monomer unit and a conjugated diene monomer unit and can optionally include other monomer units.

-Aromatic vinyl monomer unit-

Examples of aromatic vinyl monomers that can form an aromatic vinyl monomer unit include aromatic monovinyl compounds such as styrene, styrene sulfonic acid and salts thereof, $\alpha$-methylstyrene, p-t-butylstyrene, butoxystyrene, vinyltoluene, chlorostyrene, and vinylnaphthalene. Of these aromatic vinyl monomers, styrene and derivatives thereof are preferable, and styrene is more preferable. One of these aromatic vinyl monomers can be used individually, or two or more of these aromatic vinyl monomers can be used in combination.

The proportion in which aromatic vinyl monomer units are included in the polymer when the amount of all monomer units in the polymer is taken to be 100 mass% is preferably 10 mass% or more, more preferably 20 mass% or more, and even more preferably 30 mass% or more, and is preferably 60 mass% or less, more preferably 55 mass% or less, and even more preferably 50 mass% or less.

When the proportion in which aromatic vinyl monomer units are included in the polymer is not less than any of the lower limits set forth above, cycle characteristics of an obtained secondary battery can be improved.

On the other hand, when the proportion in which aromatic vinyl monomer units are included in the polymer is not more than any of the upper limits set forth above, flexibility of an obtained electrode can be improved.

Note that the proportional contents of various types of monomer units in a polymer referred to in the present disclosure can be measured by nuclear magnetic resonance (NMR) such as $^1$H-NMR.

-Conjugated diene monomer unit-

Examples of conjugated diene monomers that can form a conjugated diene monomer unit include aliphatic conjugated diene compounds having a carbon number of 4 or more such as 1,3-butadiene, isoprene, 2,3-dimethyl-1,3-butadiene, and 1,3-pentadiene. Of these conjugated diene monomers, 1,3-butadiene and isoprene are preferable, and 1,3-butadiene is more preferable. One of these conjugated diene monomers can be used individually, or two or more of these conjugated diene monomers can be used in combination.

The proportion in which conjugated diene monomer units are included in the polymer when the amount of all monomer units in the polymer is taken to be 100 mass% is preferably 30 mass% or more, more preferably 35 mass% or more, and even more preferably 40 mass% or more, and is preferably 80 mass% or less, more preferably 70 mass% or less, and even more preferably 60 mass% or less.

When the proportion in which conjugated diene monomer units are included in the polymer is not less than any of the lower limits set forth above, flexibility of an obtained electrode can be improved. It is also possible to cause an obtained electrode to display good peel strength.

On the other hand, when the proportion in which conjugated diene monomer units are included in the polymer is not more than any of the upper limits set forth above, swelling of an electrode can be effectively suppressed, and cycle characteristics of an obtained secondary battery can be improved.

-Other monomer units-

Examples of other monomer units that can be included in the polymer include, but are not specifically limited to, an acidic group-containing monomer unit, an amide group-containing monomer unit, and so forth.

It is preferable for the polymer to further include an acidic group-containing monomer unit. When the polymer further includes an acidic group-containing monomer unit, swelling of an electrode can be effectively suppressed, and cycle characteristics of an obtained secondary battery can be improved.

Note that in a case in which the particulate polymer includes a polymer A and a polymer B described further below, although it may be the case that the polymer A includes an acidic group-containing monomer unit, that the polymer B includes an acidic group-containing monomer unit, or that the polymer A and the polymer B both include an acidic group-containing monomer unit, it is preferable that the polymer A and the polymer B both include an acidic group-containing monomer unit.

Examples of acidic group-containing monomers that can form an acidic group-containing monomer unit include carboxy group-containing monomers, sulfo group-containing monomers, and phosphate group-containing monomers.

Examples of carboxy group-containing monomers include monocarboxylic acids, derivatives of monocarboxylic acids, dicarboxylic acids, acid anhydrides of dicarboxylic acids, and derivatives of these dicarboxylic acids and acid anhydrides.

Examples of monocarboxylic acids include acrylic acid, methacrylic acid, and crotonic acid.

Examples of derivatives of monocarboxylic acids include 2-ethylacrylic acid, isocrotonic acid, $\alpha$-acetoxyacrylic acid, $\beta$-trans-aryloxyacrylic acid, and $\alpha$-chloro-$\beta$-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Moreover, an acid anhydride that produces a carboxy group through hydrolysis can also be used as a carboxy group-containing monomer.

Examples of sulfo group-containing monomers include vinyl sulfonic acid, methyl vinyl sulfonic acid, (meth)allyl sulfonic acid, 3-allyloxy-2-hydroxypropane sulfonic acid, and 2-acrylamido-2-methylpropane sulfonic acid.

Note that in the present disclosure, "(meth)allyl" is used to indicate "allyl" and/or "methallyl".

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

Note that in the present disclosure, "(meth)acryloyl" is used to indicate "acryloyl" and/or "methacryloyl".

One of these acidic group-containing monomers can be used individually, or two or more of these acidic group-containing monomers can be used in combination. Of these acidic group-containing monomers, carboxy group-containing monomers are preferable, with acrylic acid, methacrylic acid, itaconic acid, maleic acid, and fumaric acid being preferable, and acrylic acid, methacrylic acid, and itaconic acid more preferable.

The proportion in which acidic group-containing monomer units are included in the polymer when the amount of all monomer units in the polymer is taken to be 100 mass% is preferably 5 mass% or more, and more preferably 8 mass% or more, and is preferably 15 mass% or less, more preferably 14 mass% or less, and even more preferably 13 mass% or less.

It is also preferable for the polymer to further include an amide group-containing monomer unit. When the polymer further includes an amide group-containing monomer unit, cycle characteristics of an obtained non-aqueous secondary battery can be improved.

Note that in a case in which the particulate polymer includes a polymer A and a polymer B described further below, although it may be the case that the polymer A includes an amide group-containing monomer unit, that the polymer B includes an amide group-containing monomer unit, or that the polymer A and the polymer B both include an amide group-containing monomer unit, it is preferable that the polymer A includes an amide group-containing monomer unit.

Examples of amide group-containing monomers that can form an amide group-containing monomer unit include (meth)acrylamide, N-methylol(meth)acrylamide, dimethyl(meth)acrylamide, diethyl(meth)acrylamide, N-methoxymethyl(meth)acrylamide, and dimethylaminopropyl(meth)acrylamide. Of these amide group-containing monomers, (meth)acrylamide is preferable, and acrylamide is more preferable. One of these amide group-containing monomers can be used individually, or two or more of these amide group-containing monomers can be used in combination.

Note that in the present disclosure, "(meth)acryl" is used to indicate "acryl" and/or "methacryl".

The proportion in which amide group-containing monomer units are included in the polymer when the amount of all monomer units in the polymer is taken to be 100 mass% is preferably 1 mass% or more, and more preferably 2 mass% or more, and is preferably 15 mass% or less, more preferably 10 mass% or less, and even more preferably 7 mass% or less.

When the proportion in which amide group-containing monomer units are included in the polymer is within any of the ranges set forth above, cycle characteristics of an obtained non-aqueous secondary battery can be effectively improved.

It is preferable for the polymer to further include an acidic group-containing monomer unit and an amide group-containing monomer unit. When the polymer further includes an acidic group-containing monomer unit and an amide group-containing monomer unit, cycle characteristics of an obtained non-aqueous secondary battery can be further improved.

The total proportion in which acidic group-containing monomer units and amide group-containing monomer units are included in the polymer when the amount of all monomer units in the polymer is taken to be 100 mass% is preferably 6 mass% or more, and more preferably 10 mass% or more, and is preferably 30 mass% or less, more preferably 24 mass% or less, and even more preferably 20 mass% or less.

When the total proportion in which acidic group-containing monomer units and amide group-containing monomer units are included in the polymer is within any of the ranges set forth above, cycle characteristics of an obtained non-aqueous secondary battery can be effectively improved.

The glass-transition point of the polymer is preferably -100°C or higher, and more preferably -90°C or higher, and is preferably 30°C or lower, and more preferably 10°C or lower. When the glass-transition point of the polymer is within any of the ranges set forth above, an obtained electrode can be caused to display good peel strength.

Note that the glass-transition point of a polymer referred to in the present disclosure can be measured according to a method described in the EXAMPLES section of the present specification.

[Properties of particulate polymer]

A volume-average particle diameter Da of the particulate polymer contained in the binder composition when measured by laser diffraction/scattering with a binder composition solid content concentration of 0.1 mass% is preferably 50 nm or more, and more preferably 100 nm or more, and is preferably 200 nm or less, and more preferably 150 nm or less.

Moreover, an average particle diameter Db of the particulate polymer contained in the binder composition when measured by dynamic light scattering with a binder composition solid content concentration of 0.005 mass% is preferably 150 nm or more, and more preferably 200 nm or more, and is preferably 300 nm or less, and more preferably 250 nm or less.

A ratio Da/Db of the volume-average particle diameter Da measured by laser diffraction/scattering relative to the average particle diameter Db measured by dynamic light scattering is preferably 1.4 or more, more preferably 1.5 or more, and even more preferably 1.6 or more, and is preferably 2.0 or less, more preferably 1.9 or less, and even more preferably 1.8 or less.

When Da/Db is not less than any of the lower limits set forth above, an obtained electrode can be caused to display good peel strength because this enables good coating of the surface of an electrode active material by the particulate polymer.

On the other hand, when Da/Db is not more than any of the upper limits set forth above, good binding force can be displayed in an electrode mixed material layer, swelling of an electrode can be effectively suppressed, and cycle characteristics of an obtained secondary battery can be improved.

The degree of swelling in electrolyte solution of the particulate polymer is preferably 110 mass% or more, and more preferably 120 mass% or more, and is preferably 300 mass% or less, more preferably 150 mass% or less, and even more preferably 140 mass% or less.

When the degree of swelling in electrolyte solution of the particulate polymer is 300 mass% or less, output characteristics and/or cycle characteristics of an obtained secondary battery can be improved. Moreover, when the degree of swelling in electrolyte solution of the particulate polymer is within any of the ranges set forth above, cell characteristics of a secondary battery can be effectively improved.

Note that the volume-average particle diameter Da, average particle diameter Db, and degree of swelling in electrolyte solution of the particulate polymer can be adjusted by altering the production conditions of the particulate polymer, the structure of the particulate polymer, or the chemical composition of the polymer forming the particulate polymer, for example.

[One embodiment of particulate polymer]

Although this is not a specific limitation, it is preferable that the particulate polymer contained in the binder composition includes a polymer A that includes an aromatic vinyl monomer unit and a conjugated diene monomer unit and a polymer B that includes an aromatic vinyl monomer unit and a conjugated diene monomer unit and that differs from the polymer A. Specifically, it is preferable that the particulate polymer includes particles containing the polymer A and particles containing the polymer B. Note that the particles containing the polymer A and the particles containing the polymer B are normally present as separate particles in the binder composition rather than being present in a composite form.

-Particles containing polymer A-

The polymer A includes an aromatic vinyl monomer unit and a conjugated diene monomer unit and can optionally include other monomer units.

The aromatic vinyl monomer unit, conjugated diene monomer unit, and other monomer units of the polymer A may be the same as those previously described in relation to the polymer included in the particulate polymer, and thus description thereof is omitted.

In particular, it is preferable that the polymer A includes an aromatic vinyl monomer unit, a conjugated diene monomer unit, a carboxy group-containing monomer unit, and an amide group-containing monomer unit, and more preferable that the polymer A includes a styrene unit, a butadiene unit, an acrylic acid unit, a methacrylic acid unit, and an acrylamide unit.

The proportions in which the various monomer units are included in the polymer A when the amount of all monomer units in the polymer A is taken to be 100 mass% are preferably as follows.

The proportion constituted by aromatic vinyl monomer units in the polymer A is preferably 40 mass% or more, and more preferably 45 mass% or more, and is preferably 55 mass% or less, and more preferably 50 mass% or less.

The proportion constituted by conjugated diene monomer units in the polymer A is preferably 25 mass% or more, and more preferably 30 mass% or more, and is preferably 40 mass% or less, and more preferably 35 mass% or less.

The proportion constituted by carboxy group-containing monomer units in the polymer A is preferably 5 mass% or more, and more preferably 10 mass% or more, and is preferably 20 mass% or less, and more preferably 15 mass% or less.

The proportion constituted by amide group-containing monomer units in the polymer A is preferably 1 mass% or more, and more preferably 3 mass% or more, and is preferably 10 mass% or less, and more preferably 7 mass% or less.

Note that the total proportion constituted by carboxy group-containing monomer units and amide group-containing monomer units in the polymer A is preferably 6 mass% or more, and more preferably 13 mass% or more, and is preferably 30 mass% or less, and more preferably 22 mass% or less.

The glass-transition point of the polymer A is preferably higher than the glass-transition point of the polymer B, is preferably -10°C or higher, and more preferably 0°C or higher, and is preferably 30°C or lower, and more preferably 10°C or lower.

When the glass-transition point of the polymer A is within any of the ranges set forth above, an obtained electrode can be caused to display good peel strength.

Note that the glass-transition point of the polymer A referred to in the present disclosure can be measured by a method described in the EXAMPLES section of the present specification.

A volume-average particle diameter Da of the particles containing the polymer A when measured by laser diffraction/scattering as a water dispersion with a solid content concentration of 0.1 mass% is preferably 100 nm or more, and more preferably 130 nm or more, and is preferably 200 nm or less, and more preferably 150 nm or less.

Note that the volume-average particle diameter Da of the particles containing the polymer A referred to in the present disclosure can be measured by a method described in the EXAMPLES section of the present specification.

Moreover, an average particle diameter Db of the particles containing the polymer A when measured by dynamic light scattering as a water dispersion with a solid content concentration of 0.005 mass% is preferably 200 nm or more, and more preferably 220 nm or more, and is preferably 300 nm or less, and more preferably 250 nm or less.

Note that the average particle diameter Db of the particles containing the polymer A referred to in the present disclosure can be measured by a method described in the EXAMPLES section of the present specification.

The degree of swelling in electrolyte solution of the particles containing the polymer A is preferably 110 mass% or more, and more preferably 130 mass% or more, and is preferably 150 mass% or less, and more preferably 140 mass% or less.

When the degree of swelling in electrolyte solution of the particles containing the polymer A is within any of the ranges set forth above, cell characteristics of a secondary battery can be improved.

Note that the degree of swelling in electrolyte solution of the particles containing the polymer A referred to in the present disclosure can be measured by a method described in the EXAMPLES section of the present specification.

The maximum pressing load of the particles containing the polymer A is preferably 100 nN or more, more preferably 200 nN or more, and even more preferably 300 nN or more, and is preferably 1,000 nN or less, and more preferably 800 nN or less.

When the maximum pressing load of the particles containing the polymer A is not less than any of the lower limits set forth above, faults in a secondary battery can be more effectively inhibited.

On the other hand, when the maximum pressing load of the particles containing the polymer A is not more than any of the upper limits set forth above, shedding from an electrode mixed material layer of an electrode active material or the like that is a constituent of the electrode mixed material layer during pressing or the like in electrode production (hereinafter, also referred to as "dusting") can be inhibited, and dusting resistance of an electrode can be improved.

Note that the maximum pressing load of the particles containing the polymer A referred to in the present disclosure can be measured by a method described in the EXAMPLES section of the present specification.

The elastic recovery of the particles containing the polymer A is preferably 120 nm or more, more preferably 140 nm or more, and even more preferably 200 nm or more, and is preferably 250 nm or less, more preferably 230 nm or less, and even more preferably 225 nm or less.

When the elastic recovery of the particles containing the polymer A is not less than any of the lower limits set forth above, injectability of an electrode mixed material layer can be improved.

On the other hand, when the elastic recovery of particles containing the polymer A is not more than any of the upper limits set forth above, flexibility of an obtained electrode can be improved.

Note that the elastic recovery of the particles containing the polymer A referred to in the present disclosure can be measured by a method described in the EXAMPLES section of the present specification.

The volume-average particle diameter Da and average particle diameter Db of the particles containing the polymer A can be adjusted by altering the production conditions of the particles containing the polymer A, for example. Moreover, the glass-transition point, degree of swelling in electrolyte solution, maximum pressing load, and elastic recovery of the particles containing the polymer A can be adjusted by altering the production conditions of the particles containing the polymer A (used amounts and timing of addition of a molecular weight modifier and/or a polymerization initiator, etc.), the structure of the particles containing the polymer A, or the chemical composition of the polymer A, for example.

-Particles containing polymer B-

The polymer B includes an aromatic vinyl monomer unit and a conjugated diene monomer unit and can optionally include other monomer units.

The aromatic vinyl monomer unit, conjugated diene monomer unit, and other monomer units of the polymer B may be the same as those previously described in relation to the polymer included in the particulate polymer, and thus description thereof is omitted.

In particular, it is preferable that the polymer B includes an aromatic vinyl monomer unit, a conjugated diene monomer unit, and a carboxy group-containing monomer unit, and more preferable that the polymer B includes a styrene unit, a butadiene unit, and a methacrylic acid unit.

The proportions in which the various monomer units are included in the polymer B when the amount of all monomer units in the polymer B is taken to be 100 mass% are preferably as follows.

The proportion constituted by aromatic vinyl monomer units in the polymer B is preferably 10 mass% or more, and more preferably 20 mass% or more, and is preferably 40 mass% or less, and more preferably 30 mass% or less.

The proportion constituted by conjugated diene monomer units in the polymer B is preferably 50 mass% or more, and more preferably 70 mass% or more, and is preferably 90 mass% or less, and more preferably 75 mass% or less.

The proportion constituted by carboxy group-containing monomer units in the polymer B is preferably 1 mass% or more, and more preferably 2 mass% or more, and is preferably 5 mass% or less, and more preferably 4 mass% or less.

The glass-transition point of the polymer B is preferably -70°C or higher, and more preferably -60°C or higher, and is preferably -30°C or lower, and more preferably -50°C or lower.

When the glass-transition point of the polymer B is within any of the ranges set forth above, an obtained electrode can be caused to display good peel strength.

Note that the glass-transition point of the polymer B referred to in the present disclosure can be measured by a method described in the EXAMPLES section of the present specification.

A volume-average particle diameter Da of the particles containing the polymer B when measured by laser diffraction/scattering as a water dispersion with a solid content concentration of 0.1 mass% is preferably 90 nm or more, and more preferably 100 nm or more, and is preferably 130 nm or less, and more preferably 120 nm or less.

Note that the volume-average particle diameter Da of the particles containing the polymer B referred to in the present disclosure can be measured by a method described in the EXAMPLES section of the present specification.

Moreover, an average particle diameter Db of the particles containing the polymer B when measured by dynamic light scattering as a water dispersion with a solid content concentration of 0.005 mass% is preferably 180 nm or more, and more preferably 200 nm or more, and is preferably 230 nm or less, and more preferably 220 nm or less.

Note that the average particle diameter Db of the particles containing the polymer B referred to in the present disclosure can be measured by a method described in the EXAMPLES section of the present specification.

The degree of swelling in electrolyte solution of the particles containing the polymer B is preferably 110 mass% or more, and more preferably 120 mass% or more, and is preferably 150 mass% or less, and more preferably 140 mass% or less.

When the degree of swelling in electrolyte solution of the particles containing the polymer B is within any of the ranges set forth above, cell characteristics of a secondary battery can be improved.

Note that the degree of swelling in electrolyte solution of the particles containing the polymer B referred to in the present disclosure can be measured by a method described in the EXAMPLES section of the present specification.

The maximum pressing load of the particles containing the polymer B is preferably 5 nN or more, more preferably 10 nN or more, and even more preferably 20 nN or more, and is preferably 50 nN or less, and more preferably 40 nN or less.

When the maximum pressing load of the particles containing the polymer B is not less than any of the lower limits set forth above, faults in a secondary battery can be more effectively inhibited.

On the other hand, when the maximum pressing load of the particles containing the polymer B is not more than any of the upper limits set forth above, dusting resistance of an electrode can be improved.

Note that the maximum pressing load of the particles containing the polymer B referred to in the present disclosure can be measured by a method described in the EXAMPLES section of the present specification.

The elastic recovery of the particles containing the polymer B is preferably 50 nm or more, more preferably 100 nm or more, and even more preferably 120 nm or more, and is preferably 200 nm or less, and more preferably 150 nm or less.

When the elastic recovery of the particles containing the polymer B is not less than any of the lower limits set forth above, injectability of an electrode mixed material layer can be improved.

On the other hand, when the elastic recovery of the particles containing the polymer B is not more than any of the upper limits set forth above, flexibility of an obtained electrode can be improved.

Note that the elastic recovery of the particles containing the polymer B referred to in the present disclosure can be measured by a method described in the EXAMPLES section of the present specification.

The volume-average particle diameter Da and average particle diameter Db of the particles containing the polymer B can be adjusted by altering the production conditions of the particles containing the polymer B, for example. Moreover, the glass-transition point, degree of swelling in electrolyte solution, maximum pressing load, and elastic recovery of the particles containing the polymer B can be adjusted by altering the production conditions of the particles containing the polymer B (used amounts and timing of addition of a molecular weight modifier and/or a polymerization initiator, etc.), the structure of the particles containing the polymer B, or the chemical composition of the polymer B, for example.

-Mixing ratio-

The proportion constituted by the particles containing the polymer B relative to the total of the particles containing the polymer A and the particles containing the polymer B (= {particles containing polymer B/(particles containing polymer A + particles containing polymer B)} $\times$ 100%) is preferably 1 mass% or more, more preferably 10 mass% or more, and even more preferably 20 mass% or more, and is preferably 50 mass% or less, more preferably 35 mass% or less, and even more preferably 30 mass% or less.

When the proportion constituted by the particles containing the polymer B is not less than any of the lower limits set forth above, peel strength of an obtained electrode can be increased.

On the other hand, when the proportion constituted by the particles containing the polymer B is not more than any of the upper limits set forth above, internal resistance of a secondary battery can be effectively reduced.

[Production method of particulate polymer]

The particulate polymer including the polymer described above can be polymerized according to a known polymerization method such as solution polymerization, suspension polymerization, bulk polymerization, or emulsion polymerization, for example.

The polymerization reaction can be addition polymerization such as ionic polymerization, radical polymerization, or living radical polymerization.

Note that a molecular weight modifier (chain transfer agent) may be used in the polymerization reaction because this enables adjustment of the maximum pressing load and/or the elastic recovery to within a preferable range. Typically used additives such as emulsifiers, dispersants, polymerization initiators, and polymerization aids can also be used. The used amounts and timing of addition of these additives can be adjusted as appropriate according to the properties of the polymer that is to be obtained.

<Other components>

The presently disclosed binder composition may contain components other than those described above (i.e., other components) to the extent that the objects according to the present disclosure are not lost. Examples of such other components include antioxidants, defoamers, and dispersants.

One of such other components may be used individually, or two or more of such other components may be used in combination in a freely selected ratio.

<Properties of binder composition>

The maximum pressing load of the binder composition is required to be 100 nN or more, is preferably 130 nN or more, and more preferably 200 nN or more, and is preferably 800 nN or less, more preferably 700 nN or less, and even more preferably 500 nN or less.

When the maximum pressing load of the binder composition is not less than any of the lower limits set forth above, faults in a secondary battery can be more effectively inhibited.

On the other hand, when the maximum pressing load of the binder composition is not more than any of the upper limits set forth above, dusting resistance of an electrode can be improved.

The elastic recovery of the binder composition is required to be not less than 120 nm and not more than 200 nm, is preferably 150 nm or more, and is preferably 195 nm or less, and more preferably 190 nm or less.

When the elastic recovery of the binder composition is not less than any of the lower limits set forth above, injectability of an electrode mixed material layer can be improved.

On the other hand, when the elastic recovery of the binder composition is not more than any of the upper limits set forth above, flexibility of an obtained electrode can be improved.

Note that the values of the maximum pressing load and the elastic recovery of the binder composition can be adjusted by altering the chemical composition and production conditions (used amount of a molecular weight modifier and/or polymerization initiator, etc.) of the particulate polymer, for example.

<Production method of binder composition>

The presently disclosed binder composition can be produced by mixing the particulate polymer, other components that are optionally used, and so forth in the presence of water without any specific limitations. Note that in a situation in which a water dispersion of the particulate polymer is used in production of the binder composition, water contained in this water dispersion may be used as the dispersion medium of the binder composition.

(Slurry composition for non-aqueous secondary battery electrode)

The presently disclosed slurry composition for a non-aqueous secondary battery electrode is a composition used in an application of forming an electrode mixed material layer, contains an electrode active material and the presently disclosed binder composition for a non-aqueous secondary battery electrode set forth above, and optionally further contains other components. In other words, the presently disclosed slurry composition for a non-aqueous secondary battery electrode normally contains an electrode active material, the above-described particulate polymer, and water as a dispersion medium, and optionally further contains other components. The presently disclosed slurry composition can form an electrode that effectively inhibit faults in a secondary battery and that has excellent flexibility as a result of the presently disclosed slurry composition containing the binder composition set forth above.

Although the following describes, as one example, a case in which the slurry composition for a non-aqueous secondary battery electrode is a slurry composition for a lithium ion secondary battery negative electrode, the presently disclosed slurry composition for a non-aqueous secondary battery electrode is not limited to the following example.

<Electrode active material>

The electrode active material is a material that gives and receives electrons in an electrode of a secondary battery. A material that can occlude and release lithium is normally used as a negative electrode active material for a lithium ion secondary battery.

Specifically, a carbon-based negative electrode active material, a metal-based negative electrode active material, or a negative electrode active material that is a combination thereof, for example, may be used as a negative electrode active material for a lithium ion secondary battery.

The carbon-based negative electrode active material can be defined as an active material containing carbon as a main framework into which lithium can be inserted (also referred to as "doping"). Examples of the carbon-based negative electrode active material include carbonaceous materials and graphitic materials.

Examples of carbonaceous materials include graphitizing carbon and non-graphitizing carbon, typified by glassy carbon, which has a structure similar to an amorphous structure.

The graphitizing carbon may be a carbon material made using tar pitch obtained from petroleum or coal as a raw material, for example. Specific examples of graphitizing carbon include coke, mesocarbon microbeads (MCMB), mesophase pitch-based carbon fiber, and pyrolytic vapor-grown carbon fiber.

Examples of the non-graphitizing carbon include pyrolyzed phenolic resin, polyacrylonitrile-based carbon fiber, quasi-isotropic carbon, pyrolyzed furfuryl alcohol resin (PFA), and hard carbon.

Examples of graphitic materials include natural graphite and artificial graphite.

Examples of artificial graphite include artificial graphite obtained through heat treatment of carbon containing graphitizing carbon at mainly 2800°C or higher, graphitized MCMB obtained through heat treatment of MCMB at 2000°C or higher, and graphitized mesophase pitch-based carbon fiber obtained through heat treatment of mesophase pitch-based carbon fiber at 2000°C or higher.

The metal-based negative electrode active material is an active material that contains metal, the structure of which usually contains an element that allows insertion of lithium, and that has a theoretical electric capacity per unit mass of 500 mAh/g or more when lithium is inserted. Examples of the metal-based active material include lithium metal, simple substances of metals that can form a lithium alloy (for example, Ag, Al, Ba, Bi, Cu, Ga, Ge, In, Ni, P, Pb, Sb, Si, Sn, Sr, Zn, and Ti) and alloys thereof, and oxides, sulfides, nitrides, silicides, carbides, and phosphides of the preceding examples. Of these examples, an active material that includes silicon (silicon-based negative electrode active material) is preferable as the metal-based negative electrode active material. The use of a silicon-based negative electrode active material can improve the output characteristics and/or capacity of an obtained non-aqueous secondary battery.

The silicon-based negative electrode active material may be silicon (Si), a silicon-containing alloy, SiO, $SiO_x$, a composite of a Si-containing material and conductive carbon obtained by coating or combining the Si-containing material with the conductive carbon, or the like, for example. Note that one of these silicon-based negative electrode active materials may be used individually, or two or more of these silicon-based negative electrode active materials may be used in combination.

<Binder composition>

The presently disclosed binder composition set forth above can be used as the binder composition.

Note that the content of the specific particulate polymer described above in the slurry composition can be set as not less than 0.5 parts by mass and not more than 15 parts by mass in terms of solid content per 100 parts by mass of the electrode active material, for example.

<Other components>

Examples of other components that may be contained in the slurry composition include, but are not specifically limited to, the same other components as may be contained in the presently disclosed binder composition. The slurry composition may further contain a conductive material such as carbon black. One of these components may be used individually, or two or more of these components may be used in combination in a freely selected ratio.

<Production of slurry composition for non-aqueous secondary battery electrode>

The slurry composition set forth above can be produced by mixing the above-described components by a known mixing method. This mixing can be performed using a mixer such as a ball mill, a sand mill, a bead mill, a pigment disperser, a grinding machine, an ultrasonic disperser, a homogenizer, a planetary mixer, or a FILMIX, for example.

(Electrode for non-aqueous secondary battery)

The presently disclosed electrode is an electrode that includes an electrode mixed material layer formed using the presently disclosed slurry composition set forth above. The presently disclosed electrode normally includes a current collector and an electrode mixed material layer formed on the current collector. The electrode mixed material layer is normally a layer obtained through drying of the presently disclosed slurry composition, contains at least an electrode active material and a polymer originating from the previously described particulate polymer, and optionally contains other components. Note that in the electrode mixed material layer, the polymer originating from the previously described particulate polymer may have a particulate form (i.e., the particulate polymer may be contained in that form in the electrode mixed material layer) or may have any other form.

The presently disclosed electrode effectively inhibits faults in a secondary battery and has excellent flexibility as a result of being produced using the presently disclosed slurry composition.

<Formation method of electrode>

The presently disclosed electrode can be produced, for example, through (1) a step of applying the slurry composition onto a current collector (application step), (2) a step of drying the slurry composition that has been applied onto the current collector to form a dried slurry (drying step), and (3) a step of pressing the dried slurry on the current collector (pressing step).

<<Application step>>

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying can be set as appropriate according to the thickness of the electrode mixed material layer that is to be obtained.

<<Drying step>>

The slurry composition on the current collector can be dried by any commonly known method without any specific limitations. Examples of drying methods that can be used include drying by warm, hot, or low-humidity air; drying in a vacuum; and drying by irradiation with infrared light, an electron beam, or the like. By drying the slurry composition on the current collector in this manner, a dried slurry is formed on the current collector.

<<Pressing step>>

The dried slurry on the current collector can be pressed using a known pressing machine without any specific limitations. In particular, pressing by a pressing roll (roll pressing) is preferable from a viewpoint of efficiently pressing the dried slurry at high speed. Through the pressing step, it is possible to increase the density of the electrode mixed material layer and improve close adherence between the electrode mixed material layer and the current collector.

(Non-aqueous secondary battery)

The presently disclosed non-aqueous secondary battery is a non-aqueous secondary battery that includes the presently disclosed electrode for a non-aqueous secondary battery. More specifically, the presently disclosed non-aqueous secondary battery is a non-aqueous secondary battery that includes a positive electrode, a negative electrode, an electrolyte solution, and a separator and in which the presently disclosed electrode for a non-aqueous secondary battery is used as at least one of the positive electrode and the negative electrode, and preferably as the negative electrode. The presently disclosed non-aqueous secondary battery has effective inhibition of faults and excellent flexibility as a result of including the presently disclosed electrode for a non-aqueous secondary battery.

Although the following describes, as one example, a case in which the secondary battery is a lithium ion secondary battery, the presently disclosed secondary battery is not limited to the following example.

<Electrodes>

As described above, the presently disclosed electrode for a secondary battery is used as at least one of the positive electrode and the negative electrode. In other words, the positive electrode of the lithium ion secondary battery may be the presently disclosed electrode and the negative electrode of the lithium ion secondary battery may be a known negative electrode other than the presently disclosed electrode. Alternatively, the negative electrode of the lithium ion secondary battery may be the presently disclosed electrode and the positive electrode of the lithium ion secondary battery may be a known positive electrode other than the presently disclosed electrode. Further alternatively, the positive electrode and the negative electrode of the lithium ion secondary battery may both be the presently disclosed electrode.

Note that an electrode obtained by forming an electrode mixed material layer on a current collector by a known production method can be used as a known electrode other than the presently disclosed electrode for a secondary battery.

<Electrolyte solution>

The electrolyte solution is normally an organic electrolyte solution obtained by dissolving a supporting electrolyte in an organic solvent. The supporting electrolyte may, for example, be a lithium salt in the case of a lithium ion secondary battery. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable as they readily dissolve in solvents and exhibit a high degree of dissociation. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region.

The concentration of the electrolyte in the electrolyte solution can be adjusted as appropriate. Furthermore, known additives may be added to the electrolyte solution.

<Separator>

Examples of separators that can be used include, but are not specifically limited to, those described in JP2012-204303A. Of these separators, a microporous membrane made of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the volumetric capacity.

<Production method of non-aqueous secondary battery>

The presently disclosed non-aqueous secondary battery can be produced by, for example, stacking the positive electrode and the negative electrode with the separator in-between, performing rolling, folding, or the like of the resultant laminate, as necessary, in accordance with the battery shape to place the laminate in a battery container, injecting the electrolyte solution into the battery container, and sealing the battery container. Note that at least one of the positive electrode and the negative electrode is the presently disclosed electrode for a non-aqueous secondary battery. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like, for example.

EXAMPLES

The following provides a more specific description of the present disclosure based on examples. However, the present disclosure is not limited to the following examples.

In the following description, "%" and "parts" used in expressing quantities are by mass, unless otherwise specified.

Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

Various evaluations and measurements in the examples and comparative examples were performed as follows.

<Maximum pressing load and elastic recovery of binder film>

A measurement sample (water dispersion of a polymer or binder composition) was dripped into a petri dish such that there was 4.0 g of solid content. Next, 24 hours of drying was performed in a 22°C to 25°C environment, and then a further 10 hours of drying was performed at 140°C to obtain a binder film of 500 $\mu$m in thickness. The obtained binder film was subsequently subjected to a nanoindentation test using a micro compression tester (MCT-W500 produced by Shimadzu Corporation). A spherical indenter (tip radius: 10 $\mu$m) was brought into contact with a surface of the binder film under measurement conditions of 0.001 Pa (absolute pressure) or lower and 23°C, was used to press the surface of the binder film to a depth of 300 nm in a thickness direction, and then the load was removed. A load-displacement curve with indentation depth plotted on a horizontal axis and pressing load plotted on a vertical axis was prepared by taking the point at which the indenter came into contact with the surface of the binder film to be a displacement of 0. The load upon pressing to the maximum depth of 300 nm was read from the load-displacement curve as the maximum pressing load. Moreover, the difference between the depth at the time of maximum pressing (i.e., 300 nm) and the depth at which the pressing load reached 0 at the time of load removal was read from the load-displacement curve as the elastic recovery.

<Volume-average particle diameter Da measured by laser diffraction/scattering>

A particle size distribution (by volume) of a measurement sample was measured in accordance with JIS Z8825 using a particle size analyzer (produced by Shimadzu Corporation; product name: SALD-2300) having laser diffraction/-scattering as a measurement principle. The particle diameter (D50) at which cumulative volume calculated from a small diameter end in the measured particle size distribution reached 50% was taken to be the average particle diameter Da.
Note that the measurement sample was taken to be a water dispersion of a polymer that had been adjusted to a solid content concentration of 0.1 mass% or a binder composition that had been adjusted to a solid content concentration of 0.1 mass%.

<Average particle diameter Db measured by dynamic light scattering>

A particle size distribution of a measurement sample was measured using a particle size analyzer (produced by Otsuka Electronics Co., Ltd.; model: FPAR-1000) having dynamic light scattering as a measurement principle. The particle diameter (D50) at which cumulative frequency of light scattering intensity calculated from a small diameter end in the measured particle size distribution reached 50% was taken to be the average particle diameter Db. Note that the measurement sample was taken to be a water dispersion of a polymer that had been adjusted to a solid content concentration of 0.005 mass% using deionized water or a binder composition that had been adjusted to a solid content concentration of 0.005 mass% using deionized water. The measurement conditions of dynamic light scattering were as follows.

Dispersion medium: Water
Measurement temperature: 25°C
Measurement concentration (solid content): 0.005 mass%
Scattering angle: 160°
Light source laser wavelength: 632.8 nm

<Glass-transition point>

A water dispersion of a polymer serving as a measurement subject was dried to prepare a measurement sample.
Next, 10 mg of the measurement sample was weighed into an aluminum pan and was measured in accordance with JIS K7121 using a differential scanning calorimeter (produced by SII NanoTechnology Inc.; product name: EXSTAR DSC6220) under measurement conditions of a temperature range of -100°C to 100°C and a heating rate of 10°C/min and with an empty aluminum pan as a reference to obtain a differential scanning calorimetry (DSC) curve. In the heating process, the glass-transition point was determined from an intersection point of a baseline directly before a heat absorption peak on the DSC curve at which a derivative signal (DDSC) reached 0.05 mW/min/mg or more and a tangent to the DSC curve at a first inflection point to appear after the heat absorption peak.

<Degree of swelling in electrolyte solution>

First, a measurement sample (water dispersion of a polymer or binder composition) was dried in an environment having a humidity of 50% and a temperature of 23°C to 25°C so as to deposit the measurement sample with a thickness of 1 $\pm$ 0.3 mm, and then the measurement sample was dried by a vacuum dryer at a temperature of 60°C for 10 hours to obtain a film. Next, this film was cut up and approximately 1 g thereof was precisely weighed. The mass of the obtained film piece was taken to be WO. This film piece was immersed in a LiPF$_6$ solution of 1.0 M in concentration (solvent: mixed solvent of ethylene carbonate (EC)/ethyl methyl carbonate (EMC) = 3/7 (mass ratio); additives: 2 mass% of vinylene carbonate and 2 mass% of fluoroethylene carbonate) as an electrolyte solution in an environment having a temperature of 60°C for 3 days and was caused to swell. Thereafter, the film piece was pulled out of the electrolyte solution and the mass thereof was measured after electrolyte solution on the surface of the film piece had been wiped off using a KimWipe. The mass of the swollen film piece was taken to be W1. The degree of swelling in electrolyte solution was calculated using the following formula.

$$\text{Degree of swelling in electrolyte solution (mass\%)} = (W1/W0) \times 100$$

<Flexibility of negative electrode>

Each negative electrode produced in the examples and comparative examples was cut out as a rectangle of 1 cm in width by 8 cm in length to obtain a test specimen. Next, a plurality of metal rods of different diameters were prepared, and the test specimen was wound around each of the metal rods with copper foil of the test specimen at the metal rod-side. Cracking of a mixed material layer in the wound test specimen was visually checked. The absence of cracking with a smaller diameter metal rod indicates better flexibility.

A: No cracking with metal rod diameter of 4.0 mm
B: No cracking with metal rod diameter of 5.0 mm, but cracking with metal rod diameter of 4.0 mm
C: Cracking with metal rod diameter of 5.0 mm

<Inhibition of secondary battery faults>

A produced lithium ion secondary battery was fully charged to a state of charge (SOC) of 100% with a 1C constant current in an environment having a temperature of -10°C. The fully charged secondary battery was disassembled, the negative electrode was taken out, and the surface state of the negative electrode mixed material layer of the negative electrode was inspected. The area of lithium that had deposited on the surface of the negative electrode mixed material layer was measured, and the lithium deposition rate on the negative electrode was calculated (= (area of deposited lithium/area of surface of negative electrode mixed material layer) $\times$ 100(%)). The lithium deposition rate was evaluated by the following standard. A lower lithium deposition rate indicates that secondary battery faults are effectively inhibited.

A: Lithium deposition rate of less than 10%
B: Lithium deposition rate of not less than 10% and less than 20%
C: Lithium deposition rate of 20% or more

<Injectability of negative electrode mixed material layer>

A negative electrode mixed material layer produced in each example or comparative example was vacuum dried at 60°C with a vacuum dryer gauge pressure of -0.09 MPa or less for 10 hours.
Next, in a dry room (dew point: -50°C or lower), a pipette was used to drip 10 µL of a LiPF$_6$-containing electrolyte solution of 1.0 M in concentration (solvent: mixed solvent of ethylene carbonate/ethyl methyl carbonate = 3/7 (mass ratio); additive: 2 volume% of vinylene carbonate (solvent ratio)) onto the surface of the negative electrode mixed material layer of the test negative electrode, and a ⌀10 mm transparent hemispherical cover made of plastic was placed over the dripped electrolyte solution (droplet). Next, the time taken for the electrolyte solution to disappear from the negative electrode mixed material layer (disappearance time) was visually measured, and injectability of the negative electrode mixed material layer was evaluated by the following standard. Disappearance in a shorter time indicates better injectability.

A: Disappearance time of not less than 0 s and less than 60 s
B: Disappearance time of not less than 60 s and less than 120 s
C: Disappearance time of not less than 120 s and less than 180 s
D: Disappearance time of 180 s or more

<Dusting resistance of negative electrode>

A negative electrode produced in each example or comparative example was cut out as 5 cm $\times$ 5 cm, and the weight W1 of the resultant test specimen was measured using an electronic balance (5 decimal places). Next, the copper foil (current collector) side of the test specimen was placed facing upward, and a cross cutting jig of 1 mm in width (jig in accordance with JIS K5400) and a cutter of 9 mm in width were used to make cuts (perform slitting) at 11 locations from the copper foil-side of the test specimen in a parallel orientation to the application direction (direction in which a negative electrode mixed material layer slurry was applied during formation of the negative electrode mixed material layer). Note that a blade of the cutter was snapped to provide a new blade prior to use. Both sides of the test specimen were lightly brushed using a brush so as to cause shed powder to drop off, and then the weight W2 of the test specimen was measured using an electronic balance (5 decimal places).

The dusting rate (= (W1 - W2)/W1 × 100(%)) was calculated from the determined weights W1 and W2 and was evaluated by the following standard. A smaller value for the dusting rate indicates better dusting resistance.

A: Dusting rate of less than 0.15%
B: Dusting rate of not less than 0.15% and less than 0.25%
C: Dusting rate of 0.25% or more

<Peel strength>

A negative electrode produced in each example or comparative example was cut out in that form as a rectangle of 100 mm in length by 10 mm in width to obtain a test specimen.

The obtained test specimen was placed with the surface of the negative electrode mixed material layer facing downward, and cellophane tape was affixed to the surface of the negative electrode mixed material layer. Cellophane tape prescribed by JIS Z1522 was used as the cellophane tape. Moreover, the cellophane tape was fixed to a test stage in advance. Thereafter, one end of the current collector was pulled vertically upward at a pulling speed of 150 mm/min to peel off the current collector, and the stress during this peeling was measured. Three measurements were made in this manner, an average value of the measurements was determined as the peel strength, and the peel strength was evaluated in accordance with the following standard. A larger peel strength indicates larger binding force of the negative electrode mixed material layer to the current collector, and thus indicates stronger adhesion.

A: Peel strength of 8 N/m or more
B: Peel strength of not less than 7 N/m and less than 8 N/m
C: Peel strength of less than 7 N/m

<Cycle characteristics of secondary battery>

A secondary battery produced in each example or comparative example was used to evaluate cycle characteristics.

Specifically, the secondary battery was first left at rest at a temperature of 25°C for 6 hours. Next, the secondary battery was charged by a 0.1C constant-current method for 100 minutes in an environment having a temperature of 25°C. The secondary battery was then subjected to 12 hours of aging in an environment having a temperature of 60°C. Next, a charge/discharge operation of charging to a cell voltage of 4.20 V and discharging to a cell voltage of 2.75 V by a 0.5C constant-current method was performed in a 25°C environment, and the initial capacity C0 was measured. This charging and discharging was further repeated, and the capacity C1 after 100 cycles was measured. A capacity maintenance rate C2 was calculated according to the following calculation formula.

$$C2\ (\%) = (C1/C0) \times 100$$

Moreover, cycle characteristics were evaluated in accordance with the following standard. Note that a larger value for the capacity maintenance rate C2 indicates better cycle characteristics.

A: Capacity maintenance rate C2 of 92% or more
B: Capacity maintenance rate C2 of not less than 87% and less than 92%
C: Capacity maintenance rate C2 of less than 87%

(Example 1)

<Production of binder composition>

[Production of particles containing polymer A]

A 5 MPa pressure-resistant vessel A equipped with a stirrer was charged with 2.1 parts of styrene as an aromatic vinyl monomer, 3.3 parts of 1,3-butadiene as a conjugated diene monomer, 0.1 parts of methacrylic acid as a carboxy group-containing monomer, 0.23 parts of sodium dodecyl diphenyl ether disulfonate as an emulsifier, 15 parts of deionized water, and 0.02 parts of potassium persulfate as a polymerization initiator to obtain a mixture A. The obtained mixture A was thoroughly stirred, was subsequently heated to 57°C to initiate polymerization, was reacted for 5 hours, and was then heated to 70°C and reacted for a further 4 hours to yield seed particles.

Separately thereto, a 5 MPa pressure-resistant vessel B equipped with a stirrer was charged with 46.6 parts of styrene as an aromatic vinyl monomer, 29.0 parts of 1,3-butadiene as a conjugated diene monomer, 14.2 parts of acrylic acid as a carboxy group-containing monomer, 4.7 parts of acrylamide as an amide group-containing monomer, 0.5 parts of tert-dodecyl mercaptan as a molecular weight modifier, 0.20 parts of sodium lauryl sulfate as an emulsifier, and 44 parts of deionized water to obtain a mixture B.

The temperature of the contents of the pressure-resistant vessel A after the seed particles had been obtained was raised to 75°C, and the mixture B was added into the pressure-resistant vessel A over 5 hours. At the same time, addition of 0.48 parts of potassium persulfate as a polymerization initiator to the pressure-resistant vessel A was initiated so as to initiate polymerization.

In other words, the overall monomer composition was 48.7 parts of styrene, 32.3 parts of 1,3-butadiene, 14.2 parts of acrylic acid, 4.7 parts of acrylamide, and 0.1 parts of methacrylic acid.

Addition of the total amount of a mixture containing this monomer composition was completed at 5 hours after the start of polymerization. Thereafter, 0.5 parts of potassium persulfate as a polymerization initiator was further added. Heating was subsequently performed to 90°C, and a reaction was performed for 4 hours.

At the point at which the polymerization conversion rate reached 97%, cooling was performed to quench the reaction. The mixture containing this polymerized product was adjusted to pH 8 through addition of 5% sodium hydroxide aqueous solution. Unreacted monomer was subsequently removed through thermal-vacuum distillation. Cooling was then further performed to yield a water dispersion containing a polymer A.

The obtained water dispersion was used to perform various measurements and evaluations. The results are shown in Table 1.

[Production of particles containing polymer B]

First, in a first stage of polymerization, 25.0 parts of styrene as an aromatic vinyl monomer, 72.0 parts of 1,3-butadiene as a conjugated diene monomer, 100.0 parts of deionized water, 0.7 parts of dodecylbenzenesulfonic acid as an emulsifier, 0.1 parts of $\alpha$-methylstyrene dimer as a chain transfer agent (molecular weight modifier), and 0.3 parts of potassium persulfate as a polymerization initiator were loaded, for core portion formation, into a 5 MPa pressure-resistant vessel equipped with a stirrer and were thoroughly stirred. These materials were then heated to 60°C to initiate polymerization. Polymerization was continued until the polymerization conversion rate reached 96%.

Next, in a second stage of polymerization, 3.0 parts of methacrylic acid as a carboxy group-containing monomer and 37.0 parts of deionized water were continuously added, for shell portion formation, into the same pressure-resistant vessel under stirring, and polymerization was continued. This water dispersion was heated to 70°C and, at the point at which the polymerization conversion rate reached 97%, was cooled to quench the reaction to form a polymer as a shell portion at an outer surface of a core portion and thereby yield a mixture containing polymer particles having a core-shell structure. Unreacted monomer was subsequently removed through thermal-vacuum distillation. The mixture containing these polymer particles was adjusted to pH 7 through addition of 5% sodium hydroxide aqueous solution to yield a water dispersion containing a polymer B.

The obtained water dispersion was used to perform various measurements and evaluations. The results are shown in Table 1.

[Production of binder composition]

The water dispersion of the polymer A and the water dispersion of the polymer B were mixed in a solid content mass ratio of 9:1 (polymer A:polymer B) to obtain a binder composition (water dispersion). The obtained binder composition was used to perform various measurements and evaluations. The results are shown in Table 2.

<Production of slurry composition for negative electrode>

In a planetary mixer equipped with a disper blade, 87.3 parts of artificial graphite as a carbon-based negative electrode active material, 9.7 parts of $SiO_x$ as a silicon-based negative electrode active material, and 2.0 parts (in terms of solid content) of a carboxymethyl cellulose sodium salt aqueous solution as a thickener were charged, were adjusted to a solid content concentration of 61.5% with deionized water, and were mixed at room temperature for 40 minutes. After mixing, the solid content concentration was adjusted stepwise to 56% and then 51% with deionized water, and 1.0 parts (in terms of solid content) of the binder composition obtained as described above was further added to yield a mixture. The obtained mixture was subjected to defoaming under reduced pressure to obtain a slurry composition for a negative electrode having good fluidity.

<Production of negative electrode>

The slurry composition for a negative electrode described above was applied onto copper foil (current collector) of 16 $\mu$m in thickness by a comma coater such as to have a coating weight of 10 mg/cm$^2$. The copper foil with the slurry composition for a negative electrode applied thereon was conveyed inside of an oven having a temperature of 75°C for 2 minutes and an oven having a temperature of 120°C for 2 minutes at a speed of 0.5 m/min so as to dry the slurry composition for a negative electrode on the copper foil and obtain a negative electrode web. The negative electrode web was rolled by roll pressing to obtain a negative electrode having a negative electrode mixed material layer thickness of 80 $\mu$m.

Flexibility, dusting resistance, injectability, and peel strength were evaluated for the obtained negative electrode. The results are shown in Table 2.

<Production of positive electrode>

A slurry composition for a positive electrode was obtained by loading 96 parts of lithium nickel manganese cobalt oxide as a positive electrode active material, 2 parts in terms of solid content of PVDF (polyvinylidene fluoride) as a binder for a positive electrode mixed material layer, 2 parts of acetylene black as a conductive material, and 20 parts of N-methylpyrrolidone as a solvent into a planetary mixer and mixing these materials.

The obtained slurry composition for a positive electrode was applied onto aluminum foil (current collector) of 16 $\mu$m in thickness by a comma coater such as to have a coating weight after drying of 24.5 mg/cm$^2$. The aluminum foil with the slurry composition for a positive electrode applied thereon was conveyed inside of an oven having a temperature of 60°C for 2 minutes and an oven having a temperature of 120°C for 2 minutes at a speed of 0.5 m/min so as to dry the slurry composition for a positive electrode on the aluminum foil and obtain a positive electrode web. This positive electrode web was rolled by roll pressing to obtain a positive electrode having a positive electrode mixed material layer thickness of 70 $\mu$m.

<Preparation of separator>

A separator made of a single layer of polypropylene (width 65 mm, length 500 mm, thickness 25 $\mu$m; produced by dry method; porosity: 55%) was prepared. This separator was cut out as a 5 cm $\times$ 5 cm square and was used in a secondary battery described below.

<Production of secondary battery>

An aluminum packing case was prepared as a battery case. The positive electrode was cut out as a 4 cm $\times$ 4 cm square and was arranged with the surface at the current collector-side in contact with the aluminum packing case. Next, the square separator was arranged on the surface of the positive electrode mixed material layer of the positive electrode. In addition, the negative electrode was cut out as a 4.2 cm $\times$ 4.2 cm square and was arranged on the separator such that the surface at the negative electrode mixed material layerside faced toward the separator. Thereafter, a LiPF$_6$ solution of 1.0 M in concentration (solvent: mixed solvent of ethylene carbonate (EC)/ethyl methyl carbonate (EMC) = 3/7 (mass ratio); additives: 2 mass% of vinylene carbonate and 2 mass% of fluoroethylene carbonate) was loaded as an electrolyte solution. The aluminum packing case was then closed by heat sealing at 150°C to tightly seal an opening of the aluminum packing and thereby produce a laminate celltype lithium ion secondary battery.

Inhibition of secondary battery faults and cycle characteristics were evaluated for the obtained secondary battery. The results are shown in Table 2.

(Examples 2 and 3)

A binder composition, a slurry composition for a negative electrode, a negative electrode, a positive electrode, a separator, and a secondary battery were produced in the same way as in Example 1 and measurements and evaluations were performed in the same way as in Example 1 with the exception that in production of the binder composition, the water dispersion of the polymer A and the water dispersion of the polymer B were mixed in a solid content mass ratio (polymer A:polymer B) of 7:3 (Example 2) or 5:5 (Example 3). The results are shown in Tables 1 and 2.

(Examples 4 to 6)

A binder composition, a slurry composition for a negative electrode, a negative electrode, a positive electrode, a separator, and a secondary battery were produced in the same way as in Example 1, 2, or 3 and measurements and evaluations were performed in the same way as in Example 1 with the exception that in production of particles containing the polymer A, the amount of tert-dodecyl mercaptan used as a molecular weight modifier was changed to 0.3 parts, and after completion of addition of the total amount of the mixture containing the monomer composition (i.e., 5 hours after the start of polymerization), heating was performed to 90°C and a reaction was performed for 4 hours without adding 0.5 parts of potassium persulfate. The results are shown in Tables 1 and 2.

(Example 7)

A binder composition, a slurry composition for a negative electrode, a negative electrode, a positive electrode, a separator, and a secondary battery were produced in the same way as in Example 1 and measurements and evaluations were performed in the same way as in Example 1 with the exception that a binder composition produced as described below was used. The results are shown in Tables 1 and 2.

<Production of binder composition>

First, in a first stage of polymerization, 55 parts of styrene as an aromatic vinyl monomer, 44 parts of 1,3-butadiene as a conjugated diene monomer, 100 parts of deionized water, 0.7 parts of dodecylbenzenesulfonic acid as an emulsifier, 0.3 parts of $\alpha$-methylstyrene dimer as a chain transfer agent (molecular weight modifier), and 0.5 parts of potassium persulfate as a polymerization initiator were loaded, for core portion formation, into a 5 MPa pressure-resistant vessel equipped with a stirrer and were thoroughly stirred. These materials were then heated to 60°C to initiate polymerization. Polymerization was continued until the polymerization conversion rate reached 96%.

Next, in a second stage of polymerization, 1 part of methacrylic acid as a carboxy group-containing monomer and 37 parts of deionized water were continuously added, for shell portion formation, into the same pressure-resistant vessel under stirring, and polymerization was continued. This water dispersion was heated to 70°C and, at the point at which the polymerization conversion rate reached 97%, was cooled to quench the reaction to form a polymer as a shell portion at an outer surface of a core portion and thereby yield a mixture containing polymer particles having a core-shell structure. Unreacted monomer was subsequently removed through thermal-vacuum distillation. The mixture containing these polymer particles was adjusted to pH 7 through addition of 5% sodium hydroxide aqueous solution to yield a water dispersion (binder composition) containing a polymer (particulate polymer).

(Example 8)

A binder composition, a slurry composition for a negative electrode, a negative electrode, a positive electrode, a separator, and a secondary battery were produced in the same way as in Example 1 and measurements and evaluations were performed in the same way as in Example 1 with the exception that a binder composition produced as described below was used. The results are shown in Tables 1 and 2.

<Production of binder composition>

First, in a first stage of polymerization, 60 parts of styrene as an aromatic vinyl monomer, 34 parts of 1,3-butadiene as a conjugated diene monomer, 100 parts of deionized water, 0.7 parts of dodecylbenzenesulfonic acid as an emulsifier, 0.3 parts of $\alpha$-methylstyrene dimer as a chain transfer agent (molecular weight modifier), and 0.5 parts of potassium persulfate as a polymerization initiator were loaded, for core portion formation, into a 5 MPa pressure-resistant vessel equipped with a stirrer and were thoroughly stirred. These materials were then heated to 60°C to initiate polymerization. Polymerization was continued until the polymerization conversion rate reached 96%.

Next, in a second stage of polymerization, 6 parts of methacrylic acid as a carboxy group-containing monomer and 37 parts of deionized water were continuously added, for shell portion formation, into the same pressure-resistant vessel under stirring, and polymerization was continued. This water dispersion was heated to 70°C and, at the point at which the polymerization conversion rate reached 97%, was cooled to quench the reaction to form a polymer as a shell portion at an outer surface of a core portion and thereby yield a mixture containing polymer particles having a core-shell structure. Unreacted monomer was subsequently removed through thermal-vacuum distillation. The mixture containing these polymer particles was adjusted to pH 7 through addition of 5% sodium hydroxide aqueous solution to yield a water dispersion (binder composition) containing a polymer (particulate polymer).

(Example 9)

A binder composition, a slurry composition for a negative electrode, a negative electrode, a positive electrode, a separator, and a secondary battery were produced in the same way as in Example 1 and measurements and evaluations were performed in the same way as in Example 1 with the exception that particles containing a polymer A (water dispersion of polymer A) produced as described below were used. The results are shown in Tables 1 and 2.

[Production of particles containing polymer A]

A 5 MPa pressure-resistant vessel A equipped with a stirrer was charged with 2.1 parts of styrene as an aromatic vinyl monomer, 3.3 parts of 1,3-butadiene as a conjugated diene monomer, 0.1 parts of methacrylic acid as a carboxy group-containing monomer, 0.23 parts of sodium dodecyl diphenyl ether disulfonate as an emulsifier, 15 parts of deionized water, and 0.02 parts of potassium persulfate as a polymerization initiator to obtain a mixture A. The obtained mixture A was thoroughly stirred, was subsequently heated to 57°C to initiate polymerization, was reacted for 5 hours, and was then heated to 70°C and reacted for a further 4 hours to yield seed particles.

Separately thereto, a 5 MPa pressure-resistant vessel B equipped with a stirrer was charged with 43.2 parts of styrene as an aromatic vinyl monomer, 28.1 parts of 1,3-butadiene as a conjugated diene monomer, 14.2 parts of acrylic acid as a carboxy group-containing monomer, 9.0 parts of acrylamide as an amide group-containing monomer, 0.5 parts of tert-dodecyl mercaptan as a molecular weight modifier, 0.20 parts of sodium lauryl sulfate as an emulsifier, and 44 parts of deionized water to obtain a mixture B.

The temperature of the contents of the pressure-resistant vessel A after the seed particles had been obtained was raised to 75°C, and the mixture B was added into the pressure-resistant vessel A over 5 hours. At the same time, addition of 0.48 parts of potassium persulfate as a polymerization initiator to the pressure-resistant vessel A was initiated so as to initiate polymerization.

In other words, the overall monomer composition was 45.3 parts of styrene, 31.4 parts of 1,3-butadiene, 14.2 parts of acrylic acid, 9.0 parts of acrylamide, and 0.1 parts of methacrylic acid.

Addition of the total amount of a mixture containing this monomer composition was completed at 5 hours after the start of polymerization. Thereafter, 0.5 parts of potassium persulfate as a polymerization initiator was further added. Heating was subsequently performed to 90°C, and a reaction was performed for 4 hours.

At the point at which the polymerization conversion rate reached 97%, cooling was performed to quench the reaction. The mixture containing this polymerized product was adjusted to pH 8 through addition of 5% sodium hydroxide aqueous solution. Unreacted monomer was subsequently removed through thermal-vacuum distillation. Cooling was then further performed to yield a water dispersion containing a polymer A.

(Comparative Example 1)

A binder composition, a slurry composition for a negative electrode, a negative electrode, a positive electrode, a separator, and a secondary battery were produced in the same way as in Example 1 and measurements and evaluations were performed in the same way as in Example 1 with the exception that the water dispersion containing the polymer A was used in that form as the binder composition without using the water dispersion containing the polymer B. The results are shown in Tables 1 and 2.

(Comparative Example 2)

A binder composition, a slurry composition for a negative electrode, a negative electrode, a positive electrode, a separator, and a secondary battery were produced in the same way as in Example 4 and measurements and evaluations were performed in the same way as in Example 1 with the exception that the water dispersion containing the polymer A was used in that form as the binder composition without using the water dispersion containing the polymer B. The results are shown in Tables 1 and 2.

(Comparative Example 3)

A binder composition, a slurry composition for a negative electrode, a negative electrode, a positive electrode, a separator, and a secondary battery were produced in the same way as in Example 1 and measurements and evaluations were performed in the same way as in Example 1 with the exception that a binder composition produced as described below was used. The results are shown in Tables 1 and 2.

<Production of binder composition>

A reactor was charged with 150 parts of deionized water, 4 parts of sodium dodecylbenzenesulfonate as an emulsifier, 65 parts of styrene as an aromatic vinyl monomer, 1.5 parts of acrylic acid and 3.5 parts of itaconic acid as carboxy group-containing monomers, and 0.5 parts of t-dodecyl mercaptan as a molecular weight modifier in this order. Next, gas inside of the reactor was purged three times with nitrogen, and then 30 parts of 1,3-butadiene as a conjugated diene monomer was added. The reactor was held at 60°C while 0.5 parts of potassium persulfate as a polymerization initiator was added so as to initiate a polymerization reaction and was stirred while continuing the polymerization reaction. At the point at which the polymerization conversion rate reached 96%, cooling was performed and 0.1 parts of hydroquinone aqueous solution (concentration 10%) as a polymerization inhibitor was added to quench the polymerization reaction. Thereafter, residual monomer was removed using a rotary evaporator having a water temperature of 60°C to yield a water dispersion of a polymer (particulate polymer). The mixture containing this particulate polymer was adjusted to pH 8 through addition of 5% sodium hydroxide aqueous solution to obtain a binder composition.

(Comparative Example 4)

A binder composition, a slurry composition for a negative electrode, a negative electrode, a positive electrode, a separator, and a secondary battery were produced in the same way as in Example 1 and measurements and evaluations were performed in the same way as in Example 1 with the exception that a binder composition produced as described below was used. The results are shown in Tables 1 and 2.

<Production of binder composition>

A 5 MPa pressure-resistant vessel A equipped with a stirrer was charged with 1.93 parts of styrene as an aromatic vinyl monomer, 3.08 parts of 1,3-butadiene as a conjugated diene monomer, 0.15 parts of itaconic acid as a carboxy group-containing monomer, 0.2 parts of sodium lauryl sulfate as an emulsifier, 20 parts of deionized water, and 0.03 parts of potassium persulfate as a polymerization initiator. These materials were thoroughly stirred, were then heated to 60°C to initiate polymerization, and were reacted for 6 hours to obtain seed particles.

After the above-described reaction, the temperature was raised to 75°C, addition of a mixture of 27.54 parts of styrene as an aromatic vinyl monomer, 43.86 parts of 1,3-butadiene as a conjugated diene monomer, 2.07 parts of itaconic acid as a carboxy group-containing monomer, 4.60 parts of acrylonitrile, 14.74 parts of methyl methacrylate, and 1.11 parts of acrylamide as other monomers, 0.27 parts of tert-dodecyl mercaptan as a molecular weight modifier, and 0.35 parts of sodium lauryl sulfate as an emulsifier from a separate vessel B to the pressure-resistant vessel A was initiated, and, at the same time, addition of 0.97 parts of potassium persulfate as a polymerization initiator to the pressure-resistant vessel A was also initiated so as to initiate a second stage of polymerization.

Moreover, 0.92 parts of hydroxyethyl acrylate was added into the pressure-resistant vessel A over 1.5 hours at 4 hours after the start of the second stage of polymerization (after addition of 70% of the overall monomer composition).

Addition of the total amount of a mixture containing this monomer composition was completed at 5.5 hours after the start of the second stage of polymerization. The temperature was then further raised to 85°C, and a reaction was performed for 6 hours.

At the point at which the polymerization conversion rate reached 97%, cooling was performed to quench the reaction to yield a mixture containing a particulate polymer. The mixture containing this particulate polymer was adjusted to pH 8 through addition of 5% sodium hydroxide aqueous solution. Unreacted monomer was subsequently removed through thermal-vacuum distillation. Thereafter, cooling was performed to yield a desired water dispersion (binder composition) containing the particulate polymer.

[Table 1]

Table 1

| | | | | Examples | | | | | | | | | Comparative examples | | | |
|---|---|---|---|---|---|---|---|---|---|---|---|---|---|---|---|---|
| | | | | 1 | 2 | 3 | 4 | 5 | 6 | 7 | 8 | 9 | 1 | 2 | 3 | 4 |
| Polymer A | Chemical composition of monomers | Acrylic acid | Parts | 14.2 | 14.2 | 14.2 | 14.2 | 14.2 | 14.2 | - | - | 14.2 | 14.2 | 14.2 | 1.5 | - |
| | | Itaconic acid | Parts | - | - | - | - | - | - | - | - | - | - | - | 3.5 | 2.22 |
| | | Methacrylic acid | Parts | 0.1 | 0.1 | 0.1 | 0.1 | 0.1 | 0.1 | 1.0 | 6.0 | 0.1 | 0.1 | 0.1 | - | - |
| | | 1,3-Butadiene | Parts | 32.3 | 32.3 | 32.3 | 32.3 | 32.3 | 32.3 | 44.0 | 34.0 | 31.4 | 32.3 | 32.3 | 30.0 | 46.94 |
| | | Styrene | Parts | 48.7 | 48.7 | 48.7 | 48.7 | 48.7 | 48.7 | 55.0 | 60.0 | 45.3 | 48.7 | 48.7 | 65.0 | 29.47 |
| | | Acrylamide | Parts | 4.7 | 4.7 | 4.7 | 4.7 | 4.7 | 4.7 | - | - | 9.0 | 4.7 | 4.7 | - | 1.11 |
| | | Acrylonitrile | Parts | - | - | - | - | - | - | - | - | - | - | - | - | 4.60 |
| | | Methyl methacrylate | Parts | - | - | - | - | - | - | - | - | - | - | - | - | 14.74 |
| | | Hydroxyethyl acrylate | Parts | - | - | - | - | - | - | - | - | - | - | - | - | 0.92 |
| | Molecular weight modifier | | Parts | 0.5 | 0.5 | 0.5 | 0.3 | 0.3 | 0.3 | 0.3 | 0.3 | 0.5 | 0.5 | 0.3 | 0.5 | 0.27 |
| | Polymerization initiator | During seed particle production | Parts | 0.02 | 0.02 | 0.02 | 0.02 | 0.02 | 0.02 | - | - | 0.02 | 0.02 | 0.02 | - | 0.03 |
| | | Initial additive amount | Parts | 0.48 | 0.48 | 0.48 | 0.48 | 0.48 | 0.48 | 0.50 | 0.50 | 0.48 | 0.48 | 0.48 | 0.50 | 0.97 |
| | | Additive amount after addition ofall monomers | Parts | 0.50 | 0.50 | 0.50 | - | - | - | - | - | 0.50 | 0.50 | - | - | - |
| | Maximum pressing load | | nN | 766 | 766 | 766 | 438 | 438 | 438 | 130 | 210 | 824 | 766 | 532 | 70 | 55 |
| | Elastic recovery | | nm | 223 | 223 | 223 | 210 | 210 | 210 | 122 | 140 | 230 | 223 | 210 | 157 | 110 |
| | Volume-average particle diameter Da | | nm | 140.0 | 140.0 | 140.0 | 140.0 | 140.0 | 140.0 | 120.0 | 125.0 | 140.0 | 140.0 | 140.0 | 155.0 | 130.0 |
| | Average particle diameter Db | | nm | 230.0 | 230.0 | 230.0 | 240.0 | 240.0 | 240.0 | 150.0 | 230.0 | 230.0 | 230.0 | 230.0 | 240.0 | 135.0 |
| | Db/Da | | - | 1.6 | 1.6 | 1.6 | 1.7 | 1.7 | 1.7 | 1.3 | 1.8 | 1.6 | 1.6 | 1.6 | 1.5 | 1.0 |
| | Glass-transition point | | °C | 4.0 | 4.0 | 4.0 | 4.0 | 4.0 | 4.0 | -5.0 | 3.0 | 6.0 | 4.0 | 4.0 | 10.0 | -9.0 |
| | Degree of swelling in electrolyte solution | | Mass% | 130.0 | 130.0 | 130.0 | 130.0 | 130.0 | 130.0 | 130.0 | 130.0 | 125.0 | 130.0 | 130.0 | 130.0 | 160.0 |

| | | | | Examples | | | | | | | | | Comparative examples | | | |
|---|---|---|---|---|---|---|---|---|---|---|---|---|---|---|---|---|
| | | | | 1 | 2 | 3 | 4 | 5 | 6 | 7 | 8 | 9 | 1 | 2 | 3 | 4 |
| Polymer B | Chemical composition of monomers | Methacrylic acid | Parts | 3.0 | 3.0 | 3.0 | 3.0 | 3.0 | 3.0 | - | - | 3.0 | - | - | - | - |
| | | 1,3-Butadiene | Parts | 72.0 | 72.0 | 72.0 | 72.0 | 72.0 | 72.0 | - | - | 72.0 | - | - | - | - |
| | | Styrene | Parts | 25.0 | 25.0 | 25.0 | 25.0 | 25.0 | 25.0 | - | - | 25.0 | - | - | - | - |
| | Molecular weight modifier | | Parts | 0.1 | 0.1 | 0.1 | 0.1 | 0.1 | 0.1 | - | - | 0.1 | - | - | - | - |
| | Polymerization initiator | | Parts | 0.3 | 0.3 | 0.3 | 0.3 | 0.3 | 0.3 | - | - | 0.3 | - | - | - | - |
| | Maximum pressing load | | nN | 28 | 28 | 28 | 28 | 28 | 28 | - | - | 28 | - | - | - | - |
| | Elastic recovery | | nm | 132 | 132 | 132 | 132 | 132 | 132 | - | - | 132 | - | - | - | - |
| | Volume-average particle diameter Da | | nm | 122.0 | 122.0 | 122.0 | 122.0 | 122.0 | 122.0 | - | - | 122.0 | - | - | - | - |
| | Average particle diameter Db | | nm | 210.0 | 210.0 | 210.0 | 210.0 | 210.0 | 210.0 | - | - | 210.0 | - | - | - | - |
| | Db/Da | | - | 1.7 | 1.7 | 1.7 | 1.7 | 1.7 | 1.7 | - | - | 1.7 | - | - | - | - |
| | Glass-transition point | | °C | -54 | -54 | -54 | -54 | -54 | -54 | - | - | -54 | - | - | - | - |
| | Degree of swelling in electrolyte solution | | Mass% | 130.0 | 130.0 | 130.0 | 130.0 | 130.0 | 130.0 | - | - | 130.0 | - | - | - | - |

EP 4 756 930 A1

[Table 2]

| | | | | | Examples | | | | | | | | | Comparative examples | | | |
|---|---|---|---|---|---|---|---|---|---|---|---|---|---|---|---|---|---|
| | | | | | 1 | 2 | 3 | 4 | 5 | 6 | 7 | 8 | 9 | 1 | 2 | 3 | 4 |
| Binder composition | Compounding ratio (polymer A:polymer B) | | | | 9:1 | 7:3 | 5:5 | 9:1 | 7:3 | 5:5 | 10:0 | 10:0 | 9:1 | 10:0 | 10:0 | 10:0 | 10:0 |
| | Overall particulate polymer (polymer A + polymer B) | Chemical composition of monomer units | Acrylic acid units | % | 12.7 | 9.9 | 7.1 | 12.7 | 9.9 | 7.1 | - | - | 12.7 | 14.2 | 14.2 | 1.5 | - |
| | | | Itaconic units | % | - | - | - | - | - | - | - | - | - | - | - | 3.5 | 2.22 |
| | | | Methacrylic acid units | % | 0.4 | 1.0 | 1.6 | 0.4 | 1.0 | 1.6 | 1.0 | 6.0 | 0.4 | 0.1 | 0.1 | - | - |
| | | | 1,3-Butadiene units | % | 36.3 | 44.2 | 52.2 | 36.3 | 44.2 | 52.2 | 44.0 | 34.0 | 35.5 | 32.3 | 32.3 | 30.0 | 46.94 |
| | | | Styrene units | % | 46.3 | 41.6 | 36.9 | 46.3 | 41.6 | 36.9 | 55.0 | 60.0 | 43.3 | 48.7 | 48.7 | 65.0 | 29.47 |
| | | | Acrylamide units | % | 4.2 | 3.3 | 2.4 | 4.2 | 3.3 | 2.4 | - | - | 8.1 | 4.7 | 4.7 | - | 1.11 |
| | | | Acrylonitrile units | % | - | - | - | - | - | - | - | - | - | - | - | - | 4.60 |
| | | | Methyl methacrylate units | % | - | - | - | - | - | - | - | - | - | - | - | - | 14.74 |
| | | | Hydroxyethyl acrylate units | % | - | - | - | - | - | - | - | - | - | - | - | - | 0.92 |
| | Maximum pressing load | | | nN | 652 | 424 | 192 | 392 | 201 | 153 | 130 | 210 | 724 | 766 | 532 | 70 | 55 |
| | Elastic recovery | | | nm | 191 | 178 | 155 | 188 | 171 | 148 | 122 | 140 | 198 | 223 | 210 | 157 | 110 |
| | Volume-average particle diameter Da | | | nm | 140.0 | 130.0 | 131.0 | 140.0 | 130.0 | 131.0 | 110.0 | 125.0 | 140.0 | 140.0 | 140.0 | 155.0 | 130.0 |
| | Average particle diameter Db | | | nm | 240.0 | 225.0 | 220.0 | 240.0 | 230.0 | 225.0 | 150.0 | 230.0 | 240.0 | 230.0 | 230.0 | 165.0 | 135.0 |
| | Db/Da | | | - | 1.7 | 1.7 | 1.7 | 1.7 | 1.8 | 1.7 | 1.4 | 1.8 | 1.7 | 1.6 | 1.6 | 1.1 | 1.0 |
| | Degree of swelling in electrolyte solution | | | Mass% | 130.0 | 130.0 | 130.0 | 130.0 | 130.0 | 130.0 | 130.0 | 130.0 | 130.0 | 130.0 | 130.0 | 130.0 | 160.0 |

EP 4 756 930 A1

25

| Evaluation | | Examples | | | | | | | | | Comparative examples | | | |
|---|---|---|---|---|---|---|---|---|---|---|---|---|---|---|
| | | 1 | 2 | 3 | 4 | 5 | 6 | 7 | 8 | 9 | 1 | 2 | 3 | 4 |
| | Flexibility | B | A | A | A | A | A | A | A | B | C | C | A | A |
| | Inhibition of faults | A | A | B | A | A | B | B | A | A | A | A | C | C |
| | Injectability | A | A | B | A | A | B | B | B | A | A | A | A | D |
| | Dusting resistance | B | A | A | A | A | A | A | A | B | B | B | A | A |
| | Peel strength | B | A | A | B | A | A | A | B | B | B | B | C | C |
| | Cycle characteristics | A | A | A | A | A | A | B | B | B | B | B | C | C |

EP 4 756 930 A1

It can be clearly seen from Table 2 that with the binder compositions of Examples 1 to 9, it is possible to form an electrode for a non-aqueous secondary battery that effectively inhibits faults in a non-aqueous secondary battery and that has excellent flexibility.

INDUSTRIAL APPLICABILITY

According to the present disclosure, it is possible to provide a binder composition for a non-aqueous secondary battery electrode with which it is possible to form an electrode for a non-aqueous secondary battery that effectively inhibits faults in a non-aqueous secondary battery and that has excellent flexibility.

Moreover, according to the present disclosure, it is possible to provide a slurry composition for a non-aqueous secondary battery electrode with which it is possible to form an electrode for a non-aqueous secondary battery that effectively inhibits faults in a non-aqueous secondary battery and that has excellent flexibility.

Furthermore, according to the present disclosure, it is possible to provide an electrode for a non-aqueous secondary battery that effectively inhibits faults in a non-aqueous secondary battery and that has excellent flexibility.

Also, according to the present disclosure, it is possible to provide a non-aqueous secondary battery in which faults are effectively inhibited and that has excellent flexibility.

**Claims**

1. A binder composition for a non-aqueous secondary battery electrode comprising a particulate polymer and water, wherein

   the particulate polymer includes a polymer that includes an aromatic vinyl monomer unit and a conjugated diene monomer unit, and
   a binder film formed using the binder composition for a non-aqueous secondary battery electrode has a maximum pressing load of 100 nN or more and an elastic recovery of not less than 120 nm and not more than 200 nm when subjected to a nanoindentation test in which a surface of the binder film is pressed to a depth of 300 nm by an indenter.

2. The binder composition for a non-aqueous secondary battery electrode according to claim 1, wherein a ratio Da/Db of a volume-average particle diameter Da of the particulate polymer measured by laser diffraction/scattering with a solid content concentration of 0.1 mass% and an average particle diameter Db of the particulate polymer measured by dynamic light scattering with a solid content concentration of 0.005 mass% is not less than 1.4 and not more than 2.0.

3. The binder composition for a non-aqueous secondary battery electrode according to claim 1, wherein the particulate polymer includes a polymer A that includes an aromatic vinyl monomer unit and a conjugated diene monomer unit and a polymer B that includes an aromatic vinyl monomer unit and a conjugated diene monomer unit and that differs from the polymer A.

4. The binder composition for a non-aqueous secondary battery electrode according to claim 1, wherein the particulate polymer has a degree of swelling in electrolyte solution of 300 mass% or less.

5. The binder composition for a non-aqueous secondary battery electrode according to claim 1, wherein the polymer included in the particulate polymer further includes an amide group-containing monomer unit.

6. A slurry composition for a non-aqueous secondary battery electrode comprising: an electrode active material; and the binder composition for a non-aqueous secondary battery electrode according to any one of claims 1 to 5.

7. The slurry composition for a non-aqueous secondary battery electrode according to claim 6, wherein the electrode active material includes a silicon-based negative electrode active material.

8. An electrode for a non-aqueous secondary battery comprising: a current collector; and an electrode mixed material layer located on the current collector, wherein
   the electrode mixed material layer is a layer formed from the slurry composition for a non-aqueous secondary battery electrode according to claim 6.

9. A non-aqueous secondary battery comprising a positive electrode, a negative electrode, a separator, and an

**EP 4 756 930 A1**

electrolyte solution, wherein
at least one of the positive electrode and the negative electrode is the electrode for a non-aqueous secondary battery according to claim 8.

**28**

## INTERNATIONAL SEARCH REPORT

| International application No. |
|---|
| **PCT/JP2024/027224** |

**A. CLASSIFICATION OF SUBJECT MATTER**

*H01M 4/62*(2006.01)i; *H01M 4/13*(2010.01)i; *H01M 4/134*(2010.01)i; *H01M 4/139*(2010.01)i; *H01M 4/1395*(2010.01)i; *H01M 4/38*(2006.01)i; *H01M 4/48*(2010.01)i; *H01M 10/052*(2010.01)i; *H01M 10/0566*(2010.01)i

FI: H01M4/62 Z; H01M4/13; H01M4/134; H01M4/139; H01M4/1395; H01M4/38 Z; H01M4/48; H01M10/052; H01M10/0566

According to International Patent Classification (IPC) or to both national classification and IPC

**B. FIELDS SEARCHED**

Minimum documentation searched (classification system followed by classification symbols)

H01M4/62; H01M4/13; H01M4/134; H01M4/139; H01M4/1395; H01M4/38; H01M4/48; H01M10/052; H01M10/0566

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-107060 A (TOPPAN PRINTING CO., LTD.) 05 July 2018 (2018-07-05) | 1-9 |
| A | CN 116218426 A (SHANDONG UNIVERSITY) 06 June 2023 (2023-06-06) | 1-9 |
| A | KR 10-1617668 B1 (ULSAN NATIONAL INSTITUTE OF SCIENCE AND TECHNOLOGY) 10 May 2016 (2016-05-10) | 1-9 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 October 2024** | **22 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/027224**

| Patent document cited in search report | | | Publication date (day/month/year) | Patent family member(s) | Publication date (day/month/year) |
|---|---|---|---|---|---|
| JP | 2018-107060 | A | 05 July 2018 | (Family: none) | |
| CN | 116218426 | A | 06 June 2023 | (Family: none) | |
| KR | 10-1617668 | B1 | 10 May 2016 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023008100 A1

- JP 2012204303 A